# EUROPÄISCHE PATENTANMELDUNG

(11) **EP 1 495 938 A2**
(43) Veröffentlichungstag der Anmeldung: **12.01.2005**
(21) Anmeldenummer: 04010703.9
(22) Anmeldetag: 05.05.2004
(51) Int. Cl.: B62B 13/10

(54) **Lenkbarer Rodelschlitten**

(30) Priorität: 09.07.2003 DE 20310561 U
(71) Anmelder: HAMAX AS, 1679 Krakeroy (NO)
(72) Erfinder: Asbjorn, Eskild, 1675 Krakeroy (NO); Arnstein Hoidal, Dag, 1675 Krakeroy (NO)
(74) Vertreter: Popp, Eugen, Dr.

(57) **Zusammenfassung**

Lenkbarer Rodelschlitten (10) mit einem Sitzteil (11), wenigstens zwei sich parallel zur Schlitten-Längsrichtung erstreckende Längskufen (12, 13), wobei die beiden Längskufen (12, 13) samt zugeordnetem Kufenrahmen (19, 20) nach Entriegelung einer Arretiereinrichtung um eine sich parallel zur Schlitten-Längsrichtung erstreckende Achse (21) aus einer Fahr- bzw. Gebrauchsstellung in eine Transportstellung aneinander klappbar sind, sowie eine vor diesen Längskufen (12, 13) angeordnete Lenkkufe (14), die mittels einer Lenkstange (15) oder eines Lenkrades steuerbar ist, wobei die Lenkkufe (14) zum Zwecke des Transports abnehmbar ist, wobei das zugehörige Anschlussteil (22) die Arretiereinrichtung für die beiden Längskufen (12, 13) in Gebrauchsstellung bildet.

## Beschreibung

Die vorliegende Erfindung betrifft einen lenkbaren Rodelschlitten mit
- einem Sitzteil,
- wenigstens zwei sich parallel zur Schlitten-Längsrichtung erstreckenden Längskufen, wobei die beiden Längskufen samt zugeordneten Kufenrahmen nach Entriegelung einer Arretierungseinrichtung um eine sich parallel zur Schlitten-Längsrichtung erstreckende Achse aus einer Fahr- bzw. Gebrauchsstellung in eine Transportstellung aneinander klappbar sind.

Derartige lenkbare Rodelschlitten sind allgemein bekannt. Die Kufen sind kurzskiartig ausgebildet und bestehen in der Regel aus Kunststoff. Gleiches gilt für das Sitzteil. Die Längskufen sind über zugeordnete Kufenrahmen mit dem Sitzteil verbunden. Der Kufenrahmen besteht in der Regel aus Längs-Schräg- und Querholmen aus Metall, insbesondere Leichtmetall, wie Aluminium od. dgl.. Die Holme können aus Rohr- oder Blechprofilen hergestellt sein.

Rodelschlitten dieser Art sind relativ voluminös mit der Folge, dass sie für den Transport entsprechend viel Platz benötigen.

Dementsprechend ist es Aufgabe der vorliegenden Erfindung, einen lenkbaren Rodelschlitten zur Verfügung zu stellen, der sich platzsparend transportieren lässt.

Diese Aufgabe wird erfindungsgemäß durch die Merkmale des kennzeichnenden Teils des Anspruches 1 gelöst.

Ein wesentlicher Punkt der vorliegenden Erfindung ist es, dass bei einem lenkbaren Rodelschlitten die beiden Längskufen samt zugeordnetem Kufenrahmen aneinander klappbar sind, wobei außerdem die Lenkkufe zum Zwecke des Transports abnehmbar sein soll. Damit lässt sich der Schlitten auf ein minimales Transportvolumen zusammenlegen. Besonders vorteilhaft für die Handhabung ist es dabei, wenn das der Lenkkufe zugeordnete Anschlussteil die Arretiereinrichtung für die beiden Längskufen in Gebrauchsstellung bildet. Diese Konstruktion ist besonders elegant, da keine gesonderten Arretierungsmittel für die Längskufen erforderlich sind. Insofern erfüllt das Anschlussteil für die Lenkkufe eine Doppelfunktion, nämlich es dient zum einen zum Anschluß der Lenkkufe am Schlitten und zum anderen zur Arretierung der Längskufen in gespreizter Gebrauchsstellung.

Nicht-lenkbare Rodelschlitten mit aneinander klappbaren Längskufen sind zwar allgemein bekannt, zum Beispiel aus der DE 298 13 839 U1 oder der WO 01/53140 A1. Dabei geht es primär um die Art der Verstrebung und einem der jeweiligen Verstrebung angepassten Klappmechanismus.

Im Lichte dieses Standes der Technik liegt natürlich der Schwerpunkt der vorliegenden Erfindung in der abnehmbaren Lenkkufe, wobei das Anschlussteil derselben zugleich die Arretiereinrichtung für die beiden Längskufen in auseinander gespreizter Gebrauchsstellung bildet. Für dieses Konzept gibt es kein Vorbild im Stand der Technik, und zwar insbesondere auch nicht durch die DE-PS 22 28 840, die einen klappbaren Rodelschlitten mit Lenkkufe beschreibt und darstellt. Dort ist in bezug auf die Lenkkufe und die der Lenkkufe zugeordnete Lenkstange zum Zwecke des Transports lediglich vermerkt, dass die Lenkstange relativ zum Lenkschaft in eine Lage etwa parallel zur Längsrichtung des Schlittens verdrehbar sein soll. Im übrigen ist der die Lenkachse definierte Lenkschaft dauerhaft mit einem mittleren Rahmenteil verbunden, auf dem sich auch das Sitzteil befindet. Eine Demontage der Lenkung zum Zwecke des Transports ist nicht vorgesehen.

Vorzugsweise sind die beiden Längskufen bzw. deren Kufenrahmen und eine gemeinsame, sich unterhalb des Sitzteils erstreckende Achse verschwenkbar gelagert.

Insofern ergibt sich eine konstruktive Vereinfachung gegenüber dem Stand der Technik gemäß der DE-PS 22 28 840, bei der jeder Kufenrahmen um eine gesonderte sich unterhalb des Sitzteils erstreckende Längsachse verschwenkbar ist. Erfindungsgemäß wird also eine Schwenkachse eingespart. Dadurch wird eine einfachere und dementsprechend kostengünstigere Konstruktion erhalten, wobei im vorliegenden Fall zu beachten ist, dass es sich bei den hier fraglichen Gegenständen nahezu um Massen-Sportartikel handelt.

Bei einer bevorzugten Detailkonstruktion ist das Lenkkufen-Anschlußteil unmittelbar an den vorderen Enden der den Längskufen zugeordneten Kufenrahmen anschließbar, und zwar insbesondere ansteckbar. Eine konkrete Ausführungsform zeichnet sich dadurch aus, dass die vorderen Enden der den Längskufen zugeordneten Kufenrahmen sich parallel zu einem zwischen Längsstange oder -rad und Lenkkufe ausgebildeten, die Lenkachse definierenden Längsschaft erstreckende Anschlussschienen oder -winkel aufweisen, auf die in Gebrauchsstellung der Längskufen ein dem Längsschaft zugeordneter Spreizkörper aufschiebbar ist. Dieser Spreizkörper definiert das erwähnte Lenkkufen-Anschlußteil. Insbesondere ist der vorgenannte Spreizkörper mit den vorderen Enden der Kufenrahmen verrastbar.

Von besonderem Vorteil für das Fahrverhalten ist in Verbindung mit den vorgenannten Merkmalen, aber auch unabhängig davon noch erwähnenswert, dass erfindungsgemäß die Lenkkurve tailliert ausgebildet ist. Damit können ähnlich wie mit taillierten Skiern engere Kurven gefahren werden. Bei stark ausgeprägter Taillierung ergibt sich ein carving-artiges Fahrverhalten. Dieses kann auch unterstützt werden durch zusätzliche Taillierung der beiden seitlichen Längskufen, die dem Sitzteil zugeordnet und hinter der Lenkkufe angeordnet sind.

Zur weiteren Verbesserung des Fahrverhaltens, insbesondere beim Kurvenfahren, ist die Gleitfläche der Lenkkufe in Richtung quer zur Lenkkufen-Längsrichtung vorzugsweise trapezförmig oder konvex gewölbt ausgebildet. Damit ist auch bei etwas tieferem Schnee ein gutes Lenkverhalten gewährleistet. Vor allem lässt sich der Schlittern leichter lenken als bei einer Lenkkufe mit eben ausgebildeter Gleitfläche.

Nachstehend wird eine bevorzugte Ausführungsform eines erfindungsgemäßen Rodelschlittens anhand der beigefügten Zeichnungen erläutert. Diese zeigt in:
- Fig. 1: einen lenkbaren Rodelschlitten gemäß Erfindung in Fahr- bzw. Gebrauchsstellung in perspektivischer Ansicht von schräg hinten;
- Fig. 2: den Anschluß der Lenkkufe an den den beiden Längskufen zugeordneten Kufenrahmen in perspektivischer Ansicht von schräg hinten und vergrößertem Maßstab;
- Fig. 3: die Zuordnung zwischen Kufenrahmen und Lenkkufe unmittelbar vor der Montage dieser beiden Teile in einen Zustand entsprechend Fig. 2; und
- Fig. 4: die Längskufen samt Kufenrahmen im aneinander geklappten Zustand unter Weglassung von Sitzteil und Lenkkufe, in perspektivischer Ansicht entsprechend Fig. 1.

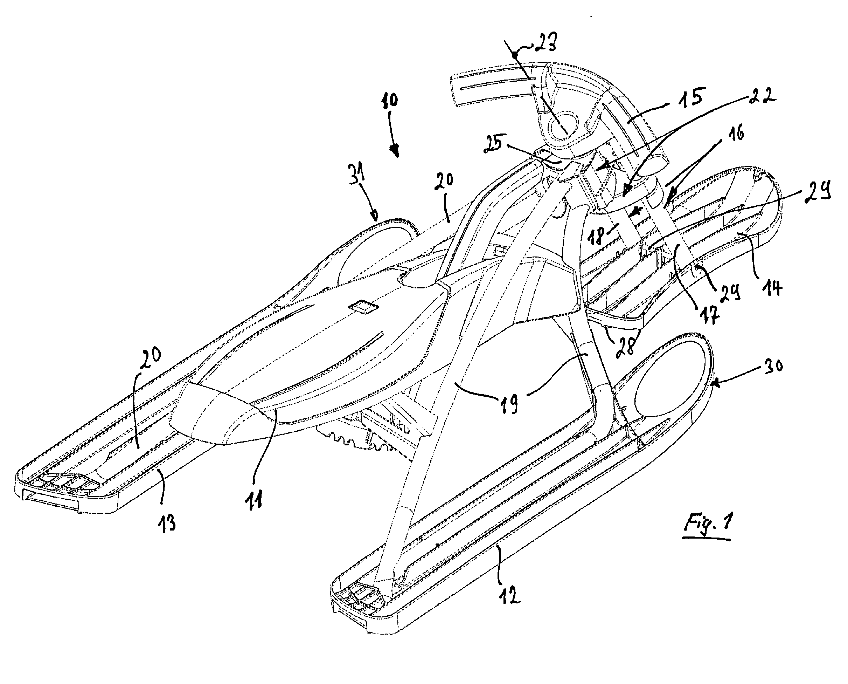

Der in Fig. 1 dargestellte lenkbare Rodelschlitten 10 umfaßt einen Sitzteil in Form einer aus Kunststoff hergestellten Sitzschale 11, zwei sich parallel zur Schlitten-Längsrichtung erstreckende Längskufen 12 und 13, sowie eine vor diesen Längskufen angeordnete Lenkkufe 14, die mittels einer Lenkstange 15 steuerbar ist. Zu diesem Zweck ist die Längsstange 15 steuerbar ist. Zu diesem Zweck ist die Längsstange 15 über einen Lenkschaft 16 mit der Lenkkufe 14 gekoppelt. Konkret ist der Längsschaft 16 als Lenkgabel ausgebildet, d.h. umfaßt zwei sich parallel zueinander und im Querabstand voneinander erstreckende Gabelarme 17, 18.

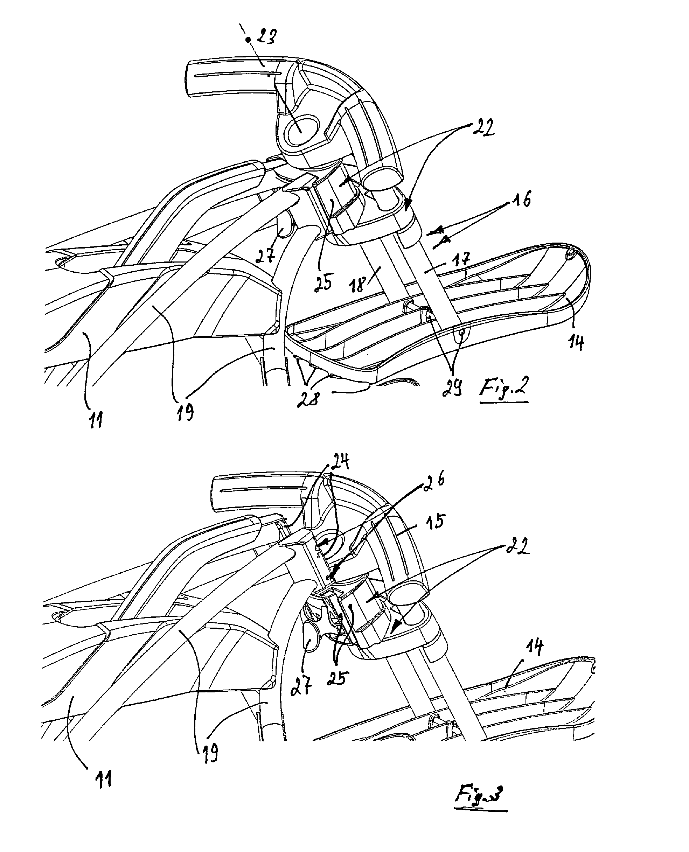

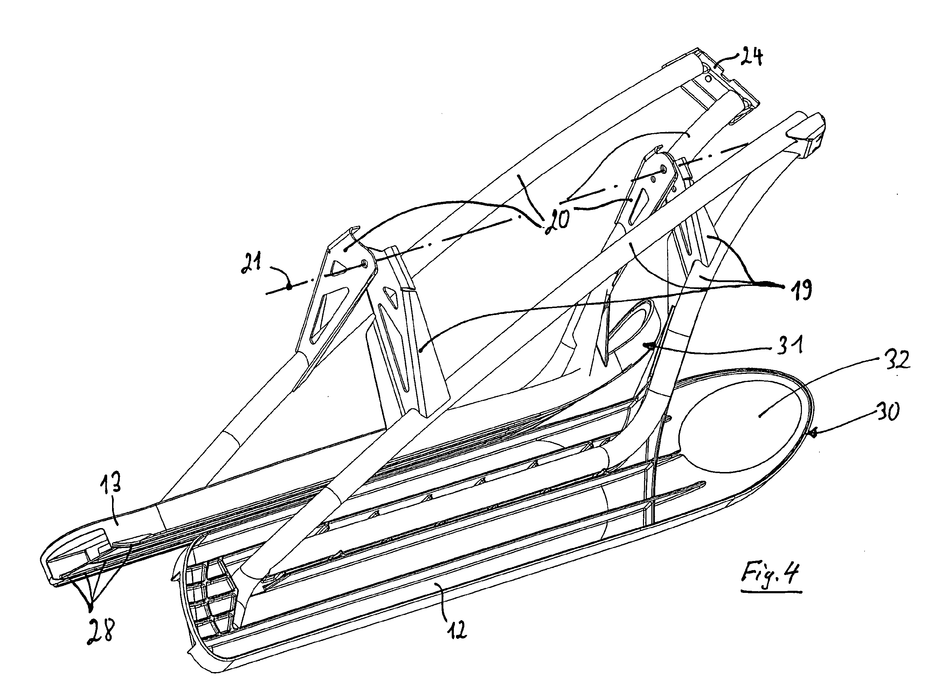

Die beiden Längskufen 12, 13 sind samt zugeordneter Kufenrahmen 19, 20 nach Entriegelung einer Arretierungseinrichtung um eine gemeinsame und sich parallel zur Schlitten-Längsrichtung erstreckende Achse 21 aus einer in Fig. 1 dargestellten Fahr- bzw. Gebrauchsstellung in eine Transportstellung entsprechend Fig. 4 aneinander klappbar.

Die Lenkkufe 14 ist zum Zwecke des Transports abnehmbar (siehe Figuren 3 und 4), wobei das zugehörige Anschlussteil die erwähnte Arretiereinrichtung für die beiden Längskufen 12, 13 in Gebrauchsstellung entsprechend Fig. 1 bildet. Die Längskufen 12, 13 bzw. deren Kufenrahmen 19, 20 sind, wie bereits erwähnt um eine gemeinsame, sich unterhalb des Sitzteils 11 erstreckende Achse 21 verschwenkbar. Das Längskufen-Anschlußteil 22 ist an den vorderen Enden der den Längskufen 12, 13 zugeordneten Kufenrahmen 19, 20 ansteckbar. Zu diesem Zweck weisen die vorderen Enden der den Längskufen 12, 13 zugeordneten Kufenrahmen 19, 20 sich parallel zu dem zwischen Längsstange 15 und Lenkkufe ausgebildeten, die Lenkachse 23 definierenden Längsschaft erstreckende Anschlussschienen oder -winkel 24 auf, auf die in Gebrauchsstellung der Längskufen 12, 13 ein dem Längsschaft 16 zugeordneter Spreizkörper 25 aufschiebbar ist. Dieser Spreizkörper 25 definiert bzw. ist Teil des Lenkkufen-Anschlußteils 22.

Der Spreizkörper 25 ist mit den vorderen Enden der Kufenrahmen 19, 20, nämlich an den Anschlusswinkeln 24 verrastbar. Zu diesem Zweck weist der Spreizkörper federelastisch vorgespannte Rastvorsprünge auf, die zur Arretierung der den Längskufen 12, 13 zugeordneten Kufenrahmen 19, 20 in Gebrauchsstellung derselben in komplementäre Ausnehmungen 26 an den Anschlusswinkeln 24 am vorderen Ende der beiden Kufenrahmen 19, 20 einrastbar sind. Die Rastvorsprünge sind an den beiden Längskanten einer mit dem Spreizkörper verbundenen federelastischen Betätigungslasche 27 aus Kunststoff od. dgl. angeformt, und zwar derart, dass zur Entriegelung der vorgenannten Verrastung die Rastvorsprünge lediglich durch Ausübung von Druck auf die Betätigungslasche 27 in Entriegelungsstellung bewegbar sind. Alternativ erfolgt die Fixierung des Spreizkörpers 25 und dementsprechend der Kufenrahmen 19, 20 in auseinandergeklappter Fahrstellung durch einen Schraubbolzen, der sich quer durch die vorderen Anschlußwinkel 24 und den Spreizkörper 25 hindurcherstreckt. Damit wird der Spreizkörper 25 sowie das dazugehörige Lenkkufen-Anschlußteil 22 samt Lenkschaft 16 und Lenkkufe 14 sicher am übrigen Rahmen gehalten. Eine versehentliche Entrastung der Anordnung kann nicht geschehen.

Wie der Fig. 1 entnommen werden kann, ist die Lenkkufe 14 tailliert ausgebildet. Des weiteren lassen die Figuren 2 und 4 erkennen, dass die Gleitflächen sowohl von Längskufen als auch Lenkkufe jeweils mehrere sich in Kufenlängsrichtung erstreckende Führungsrippen 28 aufweisen. Diese sind in Richtung quer zur Längserstreckung der Kufen jeweils voneinander beabstandet. Sie dienen einem verbesserten Spurverhalten des Schlittens. Statt Führungsrippen können auch Führungsnuten vorgesehen sein, wobei sich jedoch Rippen für ein Fahren auf etwas vereister Fläche besser eignen.

Wie bereits erwähnt, ist die Lenkkufe 14 an einem Lenkschaft 16 in Form einer Lenkgabel 17, 18 angeschlossen, und zwar vorzugsweise um eine sich quer zur Lenkkufen-Längsrichtung erstreckende Horizontalachse 29 verschwenkbar gelagert. Damit kann sich die Lenkkufe Bodenunebenheiten beim Überfahren derselben anpassen. Die Lenkkufe ist dabei in bezug auf ihre Längserstreckung asymmetrisch an der Lenkgabel 17, 18 angeschlossen, so dass sie im unbelasteten Zustand, insbesondere bei abgenommener Lenkung sich selbsttätig in eine Lage etwa parallel zum Lenkschaft 16 bzw. den Lenkgabelarmen 17, 18 klappt. Damit wird auch diesbezüglich ein minimales Transportvolumen eingenommen.

An der Lenkgabel 17, 18 ist schließlich der Spreizkörper 25 um eine sich parallel zur Lenkgabel bzw. zum Lenkschaft erstreckende Achse verschwenkbar gelagert, wobei diese Achse die Lenkachse 23 definiert.

Zwischen Spreizkörper 25 und Lenkgabel 17, 18 ist noch ein rotationselastisches Element, insbesondere eine Torsionsfeder wirksam, und zwar derart, dass in unbelastetem Zustand die Lenkkufe 14 relativ zum Spreizkörper 25 nach einer Rotationsseite hin vorbelastet ist. Auch dies dient einer Kompaktierung der gesamten Lenkung nach Abnahme vom Schlitten zu Transportzwecken.

Den Figuren 1 und 4 kann noch entnommen werden, dass die Vorderenden der beiden Längskufen 12, 13 nach oben gebogene Schaufeln 30, 31 aufweisen, an deren Oberseite muldenartige Vertiefungen 32 ausgebildet sind, in denen der Benutzer seine Füße abstützen kann.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 10: lenkbarer Rodelschlitten
- 11: Sitzteil
- 12: Längskufe
- 13: Längskufe
- 14: Lenkkufe
- 15: Lenkstange
- 16: Lenkschaft
- 17: Gabelarm
- 18: Gabelarm
- 19: Kufenrahmen
- 20: Kufenrahmen
- 21: Achse
- 22: Anschlußteil
- 23: Lenkachse
- 24: Anschlußwinkel
- 25: Spreizkörper
- 26: Ausnehmung
- 27: Betätigungslasche
- 28: Führungsrippe
- 29: Horizontalachse
- 30: Schaufel
- 31: Schaufel
- 32: muldenartige Vertiefung

## Patentansprüche

1. Lenkbarer Rodelschlitten (10) mit
- einem Sitzteil (11),
- wenigstens zwei sich parallel zur Schlitten-Längsrichtung erstreckende Längskufen (12, 13), wobei die beiden Längskufen (12, 13) samt zugeordnetem Kufenrahmen (19, 20) nach Entriegelung einer Arretiereinrichtung um eine sich parallel zur Schlitten-Längsrichtung erstreckende Achse (21) aus einer Fahr- bzw. Gebrauchsstellung in eine Transportstellung aneinander klappbar sind, sowie
- eine vor diesen Längskufen (12, 13) angeordnete Lenkkufe (14), die mittels einer Lenkstange (15) oder eines Lenkrades steuerbar ist,
**dadurch gekennzeichnet, dass**
die Lenkkufe (14) zum Zwecke des Transports abnehmbar ist, wobei das zugehörige Anschlussteil (22) die Arretiereinrichtung für die beiden Längskufen (12, 13) in Gebrauchsstellung bildet.

2. Schlitten nach Anspruch 1,
**dadurch gekennzeichnet, dass**
die Längskufen (12, 13) bzw. deren Kufenrahmen (19, 20) um eine gemeinsame, sich unterhalb des Sitzteils (11) erstreckende Achse (21) verschwenkbar sind.

3. Schlitten nach Anspruch 1 oder 2,
**dadurch gekennzeichnet, dass**
das Lenkkufen-Anschlußteil (22) unmittelbar an den vorderen Enden der den Längskufen (12, 13) zugeordneten Kufenrahmen (19, 20) anschließbar, insbesondere ansteckbar ist.

4. Schlitten nach Anspruch 3,
**dadurch gekennzeichnet, dass**
die vorderen Enden der den Längskufen (12, 13) zugeordneten Kufenrahmen (19, 20) sich parallel zu einem zwischen Längsstange (15) oder -rad und Lenkkufe (14) ausgebildeten, die Lenkachse (23) definierenden Längsschaft (16) erstreckende Anschlussschienen oder -winkel (24) aufweisen, auf die in Gebrauchsstellung der Längskufen (12, 13) ein dem Lenkschaft (16) zugeordneter, insbesondere als Teil des Lenkkufen-Anschlußteils (22) ausgebildeter Spreizkörper (25) aufschiebbar ist.

5. Schlitten nach Anspruch 4,
**dadurch gekennzeichnet, dass**
der Spreizkörper (25) mit den vorderen Enden der Kufenrahmen (19, 20), insbesondere an den Anschlussschienen oder -winkeln (24) verrastbar ist.

6. Schlitten nach Anspruch 5,
**dadurch gekennzeichnet, dass**
der Spreizkörper (25) elastisch vorgespannte Rastvorsprünge aufweist, die zur Arretierung der den Längskufen (12, 13) zugeordneten Kufenrahmen (19, 20) in Gebrauchsstellung derselben in komplementäre Ausnehmungen (26) an den Anschlussschienen oder -winkeln (24) am vorderen Ende der beiden Kufenrahmen (19, 20) selbsttätig einrastbar sind.

7. Schlitten, insbesondere nach einem der Ansprüche 1 bis 6,
**dadurch gekennzeichnet, dass**
die Lenkkufe (14) tailliert ausgebildet ist.

8. Schlitten nach Anspruch 7,
**dadurch gekennzeichnet, dass**
die Gleitfläche der Lenkkufe (14) in Richtung quer zur Lenkkufen-Längsrichtung trapezförmig oder konvex gewölbt ausgebildet ist.

9. Schlitten nach einem der Ansprüche 1 bis 8,
**dadurch gekennzeichnet, dass**
die Gleitflächen von Längs- und Lenkkufen jeweils wenigstens eine sich in Kufenlängsrichtung erstreckende Führungsrippe (28) oder -nut aufweisen.

10. Schlitten nach einem der Ansprüche 1 bis 9,
**dadurch gekennzeichnet, dass**
der an der Lenkkufe (14) angeschlossene Längsschaft (16) in Form einer Lenkgabel mit Gabelarmen (17, 18) ausgebildet ist, wobei letztere an der Lenkkufe (14) um eine sich quer zur Lenkkufen-Längsrichtung erstreckende Horizontalachse verschwenkbar gelagert sind, und dass an dem vorgenannten Längsschaft (16 bzw. 17, 18) der Spreizkörper (25) um eine sich parallel dazu erstreckende Achse verschwenkbar gelagert ist, wobei diese Achse die Lenkachse (23) definiert.

11. Schlitten nach Anspruch 10,
**dadurch gekennzeichnet, dass**
zwischen Spreizkörper (25) und Lenkgabel (17, 18) ein rotationselastisches Element, insbesondere eine Torsionsfeder wirksam ist, derart, dass in unbelastetem Zustand die Lenkkufe (14) relativ zum Spreizkörper (25) nach einer Rotationsseite hin vorbelastet ist.

12. Schlitten nach einem der Ansprüche 1 bis 4 und/oder 7 bis 11,
**dadurch gekennzeichnet, dass**
der Spreizkörper (25) mit den vorderen Enden der Kufenrahmen (19, 20), insbesondere deren Anschlußschienen oder -winkeln (24) durch einen sich durch diese Teile hindurcherstreckenden Querbolzen, insbesondere Schraubbolzen verbindbar ist.
